# EUROPEAN PATENT SPECIFICATION

(11) **EP 4 458 543 B1**
(45) Date of publication and mention of the grant of the patent: **03.09.2025**
(21) Application number: 23315170.3
(22) Date of filing: 05.05.2023
(51) Int. Cl.: B29C 31/02, B29C 31/00, B29C 43/00, B29C 43/24, B29C 43/34

(54) **HOPPER COMPRISING A VIBRATING DEVICE, AND CALENDERING SYSTEM COMPRISING SUCH A HOPPER**
TRICHTER MIT EINER VIBRATIONSVORRICHTUNG UND KALANDERSYSTEM MIT SOLCH EINEM TRICHTER
TRÉMIE COMPRENANT UN DISPOSITIF VIBRANT, ET SYSTÈME DE CALANDRAGE COMPRENANT UNE TELLE TRÉMIE

(43) Date of publication of application: 06.11.2024
(73) Proprietor: Automotive Cells Company SE, 33520 Bruges (FR)
(72) Inventor: Locqueville, Frederick, 14160 Dives sur mer (FR)
(74) Representative: Alatis

(56) References cited:
- CN-A- 114 044 380
- CN-B- 106 876 734
- JP-A- 2000 104 102
- US-A1- 2013 095 289

## Description

### TECHNICAL FIELD OF THE INVENTION

The present invention relates to a hopper, and to a calendering system comprising two parallel calender rollers and such a hopper.

### BACKGROUND ART

Calendering is a speciality process for high-volume, high quality plastic film and sheet, mainly used for PVC (polyvinyl chloride) as well as for certain other modified thermoplastics. A calendering system operates by passing a material between two contra-rotating parallel rollers to smooth or gloss it, or to produce a film or a sheet. In some particular applications, the material can be an electrically conductive mixture (for example in powder form), and the calendaring system participate to fabricate electrodes for electrochemical cells (by forming a film at the outlet of the rollers by calendering).

Calendering systems thereby comprising two parallel calender rollers and a hopper, are known in the art. The hopper classically comprises a hopper body which contains powder and is arranged above the two parallel calender rollers so as to supply with powder an interspace between the two parallel calender rollers. The hopper body defines an internal housing at atmospheric pressure in which powder is stored. Such a calendering system may further comprise a device for feeding powder into the interspace between the two calender rollers. Such a device uses mechanical parts (screw, brush, stirrer...) for drain matter. However, the matter may fall into the interspace without any control about the matter which is already present (open loop). Besides, the mechanical parts which are used in such a device introduce a high risk of powder fibrillation. This action can make obstruction and hence causes the system to collapse. Last but not least, there is no compensation in the device when matter is not regularly fed, and matter holes are likely to appear.

In order to overcome the above-mentioned drawbacks, some solutions have been developed in which the calendering system further comprises a vibrating device. The patent document CN 114744145 A discloses for example such a calendering system. The vibrating device is an ultrasonic vibrating device which is provided on an outer side wall of a material guide channel arranged beneath the hopper, and which can adjust the discharge speed and discharge density, to ensure smooth feeding of materials and to allow control of the discharge of the material guide channel. Patent document EP 1 800 775 A1 also discloses such a calendering system in which the hopper comprises a vibrating device provided on an outer side wall of the hopper to control the weight of the electrically conductive mixture in the hopper.

However, such vibration calendering systems are not sufficient to avoid the formation of material domes in powder (due to powder cohesion), which can lead to a lack of material at the rollers interspace, resulting in the formation of an inhomogeneous film at the outlet of the rollers.

A need therefore exists for a hopper for a calendering system, such a hopper avoiding formation of such material domes in powder stored in the hopper.

### SUMMARY OF THE INVENTION

The object of the present invention is therefore to overcome the drawbacks of the prior art by providing a hopper for a calendering system which avoids formation of material domes in powder stored in the hopper, so as to prevent lack of material at the rollers interspace and formation of an inhomogeneous film at the outlet of the rollers, while avoiding powder fibrillation.

According to a first aspect of the invention, there is provided a hopper comprising a hopper body containing powder, said hopper body defining an internal housing in which said powder is stored, the hopper further comprising a vibrating device, said vibrating device being provided with a vibrating generator, said vibrating device being further provided with a shaft coupled to said vibrating generator; the vibrating device being arranged such that the shaft is inserted into powder; and the hopper further comprising at least one grid, said at least one grid being arranged within said housing of the hopper body, being secured to the shaft and being configured to brake powder domes when they occur.

The coupling between a vibrating device thus configured and the presence of at least one grid secured to the shaft enables to brake powder domes when they occur. Indeed, the vibrating motion which is transmitted by the vibrating generator to the shaft forces powder particles to roll on top of each other. This energy brakes powder cohesion and establishes something very similar to a "liquid state". This configuration thus acts as a "dome avoider" which allows powder to flow continuously and homogeneously from the main hopper capacity to the bottom end of the hopper body (nose of the hopper body).

In a particular embodiment of the invention, said vibrating generator is a piezo actuator or an electromechanical vibration generator.

In another particular embodiment of the invention, the vibrating device is arranged such that the shaft is inserted into powder along a direction substantially parallel to a main direction of extension of the hopper body.

In a preferred embodiment, said longitudinal direction is a vertical direction.

In another preferred embodiment, said vibrating generator is configured to transmit a longitudinal vibration motion to the shaft, the amplitude of which is about 0.1 mm and the frequency of which is comprised between 5 Hz and 50Hz.

Such a configuration of the vibrating generator allows to transmit very short and low energy motion to the shaft. This low energy motion helps to brake powder domes and powder cohesion, and to respect the nature of the fibrillating matter because there is no high energy motion within powder.

In a particular embodiment of the invention, the hopper body comprises a funnel-shaped bottom end portion and a nose extending said funnel-shaped bottom end portion downwards, said nose facing the two parallel calender rollers. Such a configuration for the hopper body (which is very similar to that of an "up-side-down" bottle) allows to use gravity as a major force to generate powder stream from the middle-top of the hopper body to the nose. The nose allows to guide powder and to feed the interspace between the two calender rollers properly. The empty interspace is thereby filled up spontaneously with powder by gravity.

In a preferred embodiment, the hopper comprises a vertical grid arranged within said nose. This vertical grid also acts as a "dome avoider", which further helps to brake powder cohesion, and increases the homogeneity of powder which flows out of the nose.

In a particular embodiment of the invention, the internal housing is at atmospheric pressure.

In another particular embodiment of the invention, the hopper comprises at least one horizontal grid arranged within the housing of the hopper body.

The above-mentioned embodiments can be combined.

According to a second aspect of the invention, there is provided a calendering system comprising two parallel calender rollers and such a hopper, the two parallel calender rollers defining an interspace between them, the hopper body of the hopper being arranged above the two parallel calender rollers so as to supply with powder said interspace between the two parallel calender rollers.

Thanks to the particular configuration of the hopper, the calendering system according to the invention allows to have a continuous feeding without hole (needed matter) in calendering input by gravity effect, or gravity "auto-compensation" (i.e., if powder is missing in the interspace between the two rollers, powder present in the hopper falls automatically just as sand would do in a reversed bottle). The calendering system according to the invention also avoids powder fibrillation, because there are no motion mechanical parts in contact with powder, and has a further advantage which lies in that no transportation is needed between the dosing device of the system and the calender input.

In a preferred embodiment, the hopper body is mounted movable in longitudinal translation relative to the two parallel calender rollers, and the calendering system further comprises means for controlling the longitudinal translation movement of the hopper relative to the two parallel calender rollers. This allows to set a precise distance between the nose (i.e. the bottom end of the hopper body) and the rollers, and to feed thereby the right quantity of powder to the rollers, making it possible to adjust precisely the quantity of powder delivered to said rollers.

In a particular embodiment of the invention, the calendering system further comprises at least one actuator or one cylinder which is configured to move the hopper body in longitudinal translation relative to the two parallel calender rollers.

### BRIEF DESCRIPTION OF THE FIGURES

Other advantages and features of the invention will become more readily apparent from the following description of a specific embodiment of the invention. The specific embodiment of the present invention as set forth is given as a non-restrictive example only and represented in the accompanying drawings, in which:
- figure 1 is a perspective view of a calendering system according to an embodiment of the present invention, the calendering system comprising two parallel calender rollers and a hopper;
- figure 2 is a front view of the calendering system of figure 1;
- figure 3 is a perspective view showing the hopper of figure 1 and means for controlling a longitudinal translation movement of the hopper;
- figure 4 is a perspective view of the hopper of figure 1; and
- figure 5 is an enlarged perspective view showing an embodiment detail of the calendering system of figure 1.

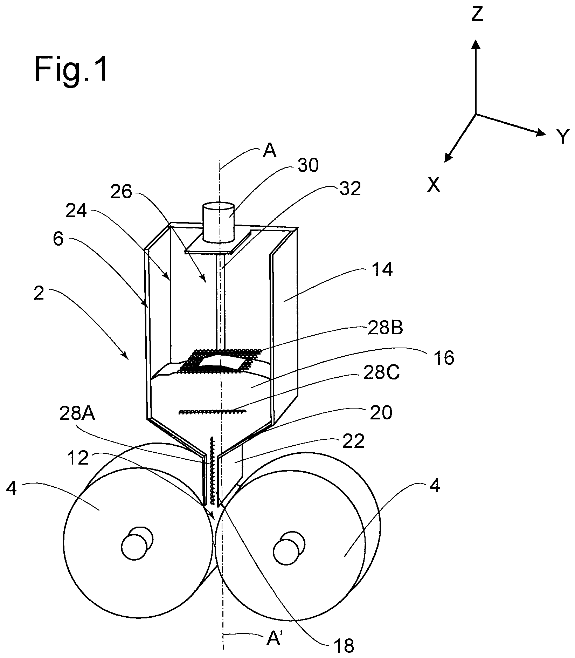

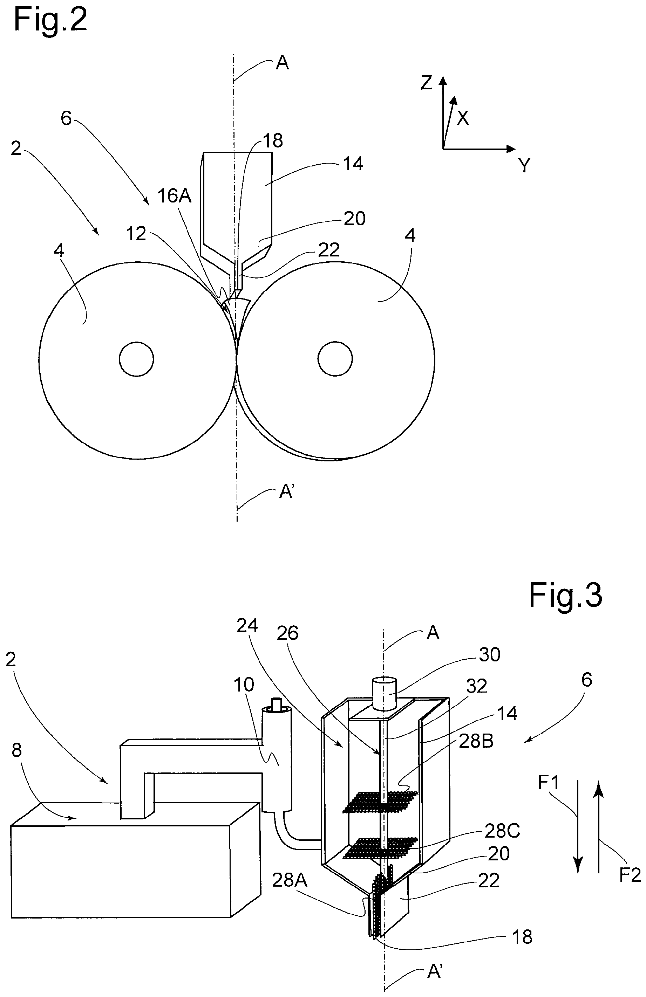

Corresponding reference numerals refer to the same or corresponding parts in each of the figures. In figures 1 and 2 an orthonormal frame **X-Y-Z** is shown. In the following description, the vertical direction designates the direction parallel to the **Z** axis, and the horizontal direction designates any direction perpendicular to the vertical direction, in other words any direction contained in the **X-Y** plane. Furthermore, the longitudinal direction A-A' designates the main direction of extension of the hopper body. A transverse direction designates any direction perpendicular to the longitudinal direction. In the particular embodiment shown in figures 1 to 5, the longitudinal direction corresponds to the vertical direction.

### DETAILED DESCRIPTION OF PREFERRED EMBODIMENTS

With reference to Figures 1 to 3, a calendering system **2** comprises two parallel calender rollers **4** and a hopper **6.** Preferably, as shown in Figure 3, the calendering system **2** further comprises means **8** for controlling a longitudinal translation movement (i.e. a linear movement along the vertical direction) of the hopper **6** relative to the two parallel calender rollers **4,** and an actuator or cylinder **10.**

As shown in Figures 1, 2 and 5, the two parallel calender rollers **4** define an interspace **12** between them. The hopper **6** classicaly comprises a hopper body **14** containing powder **16** and arranged above the two parallel calender rollers **4** so as to supply with powder **16** the interspace **12** between the two parallel calender rollers **4.** To this end, the hopper body **14** is conventionally provided with a bottom opening **18** arranged facing the interspace **12,** above it. More precisely, in the particular embodiment of Figures 1 to 5, the hopper body **14** comprises a funnel-shaped bottom end portion **20** and a nose **22** (which is provided with the bottom opening **18).** The nose **22** extends the funnel-shaped bottom end portion **20** downwards and is arranged facing the two parallel calender rollers **4,** more particularly the interspace **12** between them. Such a configuration for the hopper body **14** (which is very similar to that of an "up-side-down" bottle) allows to use gravity as a major force to generate powder stream from the middle-top of the hopper body **14** to the nose **22.** The empty interspace **12** is thereby filled up spontaneously with powder **16** by gravity.

The hopper body **14** defines an internal housing **24** at atmospheric pressure in which powder **16** is stored. Powder **16** is for example an electrically conductive mixture, and/or a thermoplastic powder. As shown in Figure 1, the hopper body **14** (and the nose **22,** more particularly) follows the calender rollers size without any width limitation (the width of the nose **22** corresponding to the length of the calender rollers **4** and being measured along the **X** axis).

The hopper **6** further comprises a vibrating device **26** and at least one grid **28A, 28B, 28C.** In the particular embodiment shown in Figures 1 to 4, the hopper **6** comprises three grids **28A, 28B, 28C,** namely one vertical grid **28A** and two horizontal grids **28B, 28C.**

The vibrating device **26** includes a vibrating generator **30** and a shaft **32** coupled to the vibrating generator **30.** The vibrating device **26** is arranged such that the shaft **32** is inserted into powder **16** along the longitudinal direction **A-A'.** In a preferred embodiment, the vibrating generator **30** is configured to transmit a longitudinal vibration motion to the shaft **32,** the amplitude of which is about 0.1 mm and the frequency of which is comprised between 5 Hz and 50Hz. Preferably, the vibrating generator **30** is a piezo actuator or an electromechanical vibration generator. The vibrating generator **30** may advantageously be configured such that the amplitude and the frequency of the longitudinal vibration motion it transmits to the shaft **32** be adjustable according to the quantity of powder **16** stored in the hopper body **14.**

Each grid **28A, 28B, 28C** is arranged within the housing **24** of the hopper body **14,** is secured to the shaft **32** and is configured to brake powder domes when they occur. The vertical grid **28A** is arranged within the nose **22** and extends in the vertical **X-Z** plane. Each of the two horizontal grids **28B, 28C** extends in the horizontal **X-Y** plane. An upper grid **28B** is arranged above a lower grid **28C** within the housing **24** of the hopper body **14.**

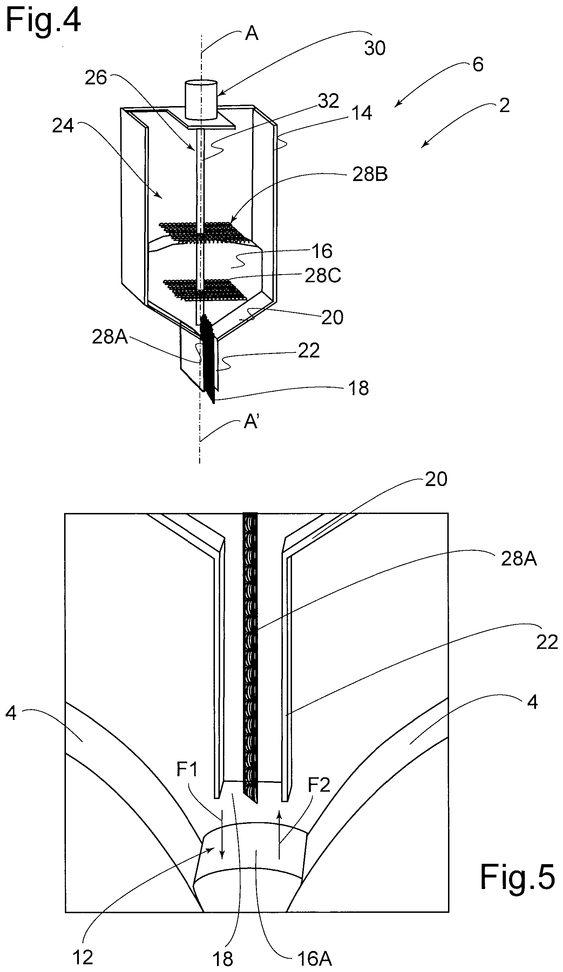

Preferably, as shown in Figure 3, the hopper body **14** is mounted movable in longitudinal translation relative to the two parallel calender rollers **4.** The controlling means **8** then allow to control the longitudinal translation of the hopper body **14** (i.e. along the vertical **Z** axis in the illustrated embodiment) in the direction of the arrows **F1, F2** in Figures 3 and 5, with an absolute ground reference. More precisely, the controlling means **8** are electrically connected to the actuator or cylinder **10,** said actuator or cylinder **10** being connected to the hopper body **14** so as to move the hopper body **14** in longitudinal translation relative to the two parallel calender rollers **4.**

The operation of the calendering system **2** according to the invention will herein be described. Initially, powder **16** which is present in the hopper body **14** falls through the nose **22** and spontaneously creates a powder nip **16A** at the interspace **12** between the two calender rollers **4.** The coupling between the vibrating device **26** and the grids **28A, 28B, 28C** enables to brake powder domes when they occur. Indeed, the low energy vibrating motion which is transmitted by the vibrating generator **30** to the shaft **32** forces powder particles to roll on top of each other. This energy brakes powder cohesion and establishes something very similar to a "liquid state". This configuration thus acts as a "dome avoider" which allows powder **16** to flow continuously and homogeneously from the main hopper capacity to the nose **22** of the hopper body **14.** When the powder nip **16A** is created at the interspace **12,** the powder stream stops from itself without any action, by physical saturation. When matter disappears and creates a hole (due to the calender rollers consumption) the powder stream appears again spontaneously because it has created an empty zone, and the gravity force becomes higher than the empty zone force. The cycle is then repeated. This calendering system **2** allows the hopper **6** to distribute the right quantity of powder **16** to the two parallel calender rollers **4.** To this end, the height of the hopper body **14** is driven by slide motion by the controlling means **8** (up/down motion along the arrows **F1, F2** in Figures 3 and 5). The higher the nose **22,** the bigger the powder nip **16A.** In the backward way, the closer the nose **22** is to the calender rollers **4,** the smaller the powder nip **16A.** The calendering system **2** according to the invention ensures homogeneous powder distribution through gravity and vibration actions, in any dimension.

## Claims

1. A hopper (6) comprising a hopper body (14) containing powder (16), said hopper body (14) defining an internal housing (24) in which said powder (16) is stored, the hopper (6) further comprising a vibrating device (26), said vibrating device (26) being provided with a vibrating generator (30),
**characterized in that** said vibrating device (26) is further provided with a shaft (32) coupled to said vibrating generator (30); the vibrating device (26) being arranged such that the shaft (32) is inserted into powder (16); and **in that** the hopper (6) further comprises at least one grid (28A, 28B, 28C), said at least one grid (28A, 28B, 28C) being arranged within said housing (24) of the hopper body (14), being secured to the shaft (32) and being configured to brake powder domes when they occur.

2. The hopper (6) according to claim 1, wherein said vibrating generator (30) is a piezo actuator or an electromechanical vibration generator.

3. The hopper (6) according to claim 1 or 2, wherein the vibrating device (26) is arranged such that the shaft (32) is inserted into powder (16) along a longitudinal direction (A-A') substantially parallel to a main direction of extension of the hopper body.

4. The hopper (6) according to claim 3, wherein said longitudinal direction (A-A') is a vertical direction.

5. The hopper (6) according to any one of the preceding claims, wherein said vibrating generator (30) is configured to transmit a longitudinal vibration motion to the shaft (32), the amplitude of which is about 0.1 mm and the frequency of which is comprised between 5 Hz and 50Hz.

6. The hopper (6) according to any one of the preceding claims, wherein the hopper body (14) comprises a funnel-shaped bottom end portion (20) and a nose (22) extending said funnel-shaped bottom end portion (20) downwards.

7. The hopper (6) according to claim 6, wherein the hopper (6) comprises a vertical grid (28A) arranged within said nose (22).

8. The hopper (6) according to any one of the preceding claims, wherein the internal housing (24) is at atmospheric pressure.

9. The hopper (6) according to any one of the preceding claims, wherein the hopper (6) comprises at least one horizontal grid (28B, 28C) arranged within the housing (24) of the hopper body (14).

10. A calendering system (2) comprising two parallel calender rollers (4) and a hopper (6), said hopper (6) being a hopper according to any one of the preceding claims, the two parallel calender rollers (4) defining an interspace (12) between them, the hopper body (14) of the hopper (6) being arranged above the two parallel calender rollers (4) so as to supply with powder (16) said interspace (12) between the two parallel calender rollers (4).

11. The calendering system (2) according to claim 10, wherein the hopper body (14) is mounted movable in longitudinal translation relative to the two parallel calender rollers (4), and the calendering system (2) further comprises means (8) for controlling the longitudinal translation movement of the hopper (6) relative to the two parallel calender rollers (4).

12. The calendering system (2) according to claim 11, wherein the calendering system (2) further comprises at least one actuator or one cylinder (10) which is configured to move the hopper body (14) in longitudinal translation relative to the two parallel calender rollers (4).

## Patentansprüche

1. Trichter (6) umfassend einen Trichterkörper (14), der Pulver (16) enthält, wobei der Trichterkörper (14) ein Innengehäuse (24) bildet, in dem das Pulver (16) gelagert ist, und der Trichter (6) ferner eine Vibrationsvorrichtung (26) umfasst, wobei die Vibrationsvorrichtung (26) mit einem Vibrationsgenerator (30) versehen ist,
**dadurch gekennzeichnet, dass** die Vibrationsvorrichtung (26) ferner mit einer Welle (32) versehen ist, die mit dem Vibrationsgenerator (30) gekoppelt ist; wobei die Vibrationsvorrichtung (26) so angeordnet ist, dass die Welle (32) in das Pulver (16) eingeführt wird; und dass der Trichter (6) ferner mindestens ein Gitter (28A, 28B, 28C) umfasst, wobei das mindestens eine Gitter (28A, 28B, 28C) innerhalb des Gehäuses (24) des Trichterkörpers (14) angeordnet ist, an der Welle (32) befestigt ist und konfiguriert ist, um Pulverkupplungen zu bremsen, wenn diese auftreten.

2. Trichter (6) nach Anspruch 1, wobei der Vibrationsgenerator (30) ein Piezoaktuator oder ein elektromechanischer Vibrationsgenerator ist.

3. Trichter (6) nach Anspruch 1 oder 2, wobei die Vibrationsvorrichtung (26) so angeordnet ist, dass die Welle (32) entlang einer Längsrichtung (A-A') im Wesentlichen parallel zu einer Haupterstreckungsrichtung des Trichterkörpers in das Pulver (16) eingeführt wird.

4. Trichter (6) nach Anspruch 3, wobei die Längsrichtung (A-A') eine vertikale Richtung ist.

5. Trichter (6) nach einem der vorhergehenden Ansprüche, wobei der Vibrationsgenerator (30) so konfiguriert ist, dass er eine Längsvibrationsbewegung auf die Welle (32) überträgt, deren Amplitude etwa 0,1 mm beträgt und deren Frequenz zwischen 5 Hz und 50 Hz liegt.

6. Trichter (6) nach einem der vorhergehenden Ansprüche, wobei der Trichterkörper (14) einen trichterförmigen unteren Endabschnitt (20) und eine Nase (22) umfasst, die den trichterförmigen unteren Endabschnitt (20) nach unten verlängert.

7. Trichter (6) nach Anspruch 6, wobei der Trichter (6) ein vertikales Gitter (28A) umfasst, das innerhalb der Nase (22) angeordnet ist.

8. Trichter (6) nach einem der vorhergehenden Ansprüche, wobei das Innengehäuse (24) unter atmosphärischem Druck steht.

9. Trichter (6) nach einem der vorhergehenden Ansprüche, wobei der Trichter (6) mindestens ein horizontales Gitter (28B, 28C) umfasst, das innerhalb des Gehäuses (24) des Trichterkörpers (14) angeordnet ist.

10. Kalandersystem (2), umfassend zwei parallele Kalanderwalzen (4) und einen Trichter (6), wobei der Trichter (6) ein Trichter nach einem der vorhergehenden Ansprüche ist und die beiden parallelen Kalanderwalzen (4) einen Zwischenraum (12) zwischen sich definieren, wobei der Trichterkörper (14) des Trichters (6) über den beiden parallelen Kalanderwalzen (4) angeordnet ist, um den Zwischenraum (12) zwischen den beiden parallelen Kalanderwalzen (4) mit Pulver (16) zu versorgen.

11. Kalandersystem (2) nach Anspruch 10, wobei der Trichterkörper (14) in Längsverschiebung relativ zu den beiden parallelen Kalanderwalzen (4) beweglich montiert ist und das Kalandersystem (2) ferner Mittel (8) zum Steuern der Längsverschiebungsbewegung des Trichters (6) relativ zu den beiden parallelen Kalanderwalzen (4) umfasst.

12. Kalandersystem (2) nach Anspruch 11, wobei das Kalandersystem (2) ferner mindestens einen Aktuator oder einen Zylinder (10) umfasst, der dazu konfiguriert ist, den Trichterkörper (14) in Längsverschiebung relativ zu den beiden parallelen Kalanderwalzen (4) zu bewegen.

## Revendications

1. Trémie (6) comprenant un corps de trémie (14) contenant de la poudre (16), ledit corps de trémie (14) définissant un logement interne (24) dans lequel ladite poudre (16) est stockée, la trémie (6) comprenant en outre un dispositif vibrant (26), ledit dispositif vibrant (26) étant pourvu d'un générateur de vibrations (30),
**caractérisée en ce que** ledit dispositif vibrant (26) est en outre pourvu d'un arbre (32) accouplé audit générateur de vibrations (30) ; le dispositif vibrant (26) étant disposé de sorte que l'arbre (32) soit inséré dans la poudre (16) ; et **en ce que** la trémie (6) comprend en outre au moins une grille (28A, 28B, 28C), ladite au moins une grille (28A, 28B, 28C) étant disposée à l'intérieur dudit logement (24) du corps de trémie (14), étant fixée à l'arbre (32) et étant conçue pour freiner des dômes de poudre lorsqu'ils se produisent.

2. Trémie (6) selon la revendication 1, dans laquelle ledit générateur de vibrations (30) est un actionneur piézoélectrique ou un générateur de vibrations électromécanique.

3. Trémie (6) selon la revendication 1 ou 2, dans laquelle le dispositif vibrant (26) est disposé de sorte que l'arbre (32) soit inséré dans la poudre (16) le long d'une direction longitudinale (A-A') sensiblement parallèle à une direction principale d'extension du corps de trémie.

4. Trémie (6) selon la revendication 3, dans laquelle ladite direction longitudinale (A-A') est une direction verticale.

5. Trémie (6) selon l'une quelconque des revendications précédentes, dans laquelle ledit générateur de vibrations (30) est configuré pour transmettre à l'arbre (32) un mouvement vibratoire longitudinal dont l'amplitude est d'environ 0,1 mm et dont la fréquence est comprise entre 5 Hz et 50 Hz.

6. Trémie (6) selon l'une quelconque des revendications précédentes, dans laquelle le corps de trémie (14) comprend une partie extrémité inférieure en forme d'entonnoir (20) et un nez (22) étendant ladite partie extrémité inférieure en forme d'entonnoir (20).

7. Trémie (6) selon la revendication 6, dans laquelle la trémie (6) comprend une grille verticale (28A) disposée dans ledit nez (22).

8. Trémie (6) selon l'une quelconque des revendications précédentes, dans laquelle le logement interne (24) est à la pression atmosphérique.

9. Trémie (6) selon l'une quelconque des revendications précédentes, dans laquelle la trémie (6) comprend au moins une grille horizontale (28B, 28C) disposée à l'intérieur du logement (24) du corps de trémie (14).

10. Système de calandrage (2) comprenant deux rouleaux de calandre parallèles (4) et une trémie (6), ladite trémie (6) étant une trémie selon l'une quelconque des revendications précédentes, les deux rouleaux de calandre parallèles (4) définissant un espace intermédiaire (12) entre eux, le corps de trémie (14) de la trémie (6) étant disposé au-dessus des deux rouleaux de calandre parallèles (4) de manière à alimenter en poudre (16) ledit espace intermédiaire (12) entre les deux rouleaux de calandre parallèles (4).

11. Système de calandrage (2) selon la revendication 10, dans lequel le corps de trémie (14) est monté mobile en translation longitudinale par rapport aux deux rouleaux de calandre parallèles (4), et le système de calandrage (2) comprend en outre un moyen (8) pour commander le mouvement de translation longitudinale de la trémie (6) par rapport aux deux rouleaux de calandre parallèles (4).

12. Système de calandrage (2) selon la revendication 11, dans lequel le système de calandrage (2) comprend en outre au moins un actionneur ou un cylindre (10) qui est conçu pour déplacer le corps de trémie (14) en translation longitudinale par rapport aux deux rouleaux de calandre parallèles (4).
